# DEMANDE DE BREVET EUROPEEN

(11) **EP 0 994 365 A1**
(43) Date de publication de la demande: **19.04.2000**
(21) Numéro de dépôt: 98870213.0
(22) Date de dépôt: 16.10.1998
(51) Int. Cl.: G01T 1/142

(54) **Procédé de mesure dosimétrique de rayonnements ionisants et dispositif dosimétrique à cet effet**

(71) Demandeur: Denis, J.-M., 1340 Ottignies (BE)
(72) Inventeur: Denis, Jean-Marc, B-1340 Ottignies (BE)
(74) Mandataire: Van Malderen, Joelle

(57) **Abrégé**

Par une mesure de déficit de charges électriques, découlant d'une ionisation dans le diélectrique du condensateur, on peut en déduire une dose absorbée dans ce milieu.

Selon l'invention, des détecteurs constitués par des condensateurs sont préalablement chargés. Cette charge est mesurée avec grande précision.

Ensuite, indépendamment de toute connexion, les détecteurs sont soumis à des radiations ionisantes.

Le déficit de charge après irradiation est déduit de la mesure avec grande précision du reliquat de charge encore contenu dans les condensateurs.

Chaque détecteur peut être identifié, ceci permettant une calibration individuelle tenant compte de la réponse de chaque condensateur.

L'ensemble des fonctions de charge, mesure de charges, identification individuelle des détecteurs, calculs, exploitation des courbes de calibration, affichage, saisie de données, communication avec des ordinateurs et périphériques peut être intégré dans un seul et même appareil.

## Description

### Objet de l'invention

La présente invention concerne un procédé de mesure dosimétrique de rayonnements ionisants et un dispositif dosimétrique permettant de mesurer avec grande précision la dose absorbée.

Il repose sur l'utilisation sans connexion permanente de condensateurs soumis à un champ de rayonnements ionisants pour la mesure de doses.

### Arrière-plan technologique

En radiothérapie, en radiodiagnostic, en radioprotection ou, de manière générale, dans les domaines utilisant les radiations ionisantes, on est amené à devoir détecter ou quantifier les doses de rayonnements ionisants ou flux de particules.

En particulier en radiothérapie, il est important, dans un souci de contrôle de qualité, de pouvoir estimer avec grande précision les doses appliquées à une zone traitée chez un patient. Dans un souci de radioprotection, on peut également souhaiter mesurer les doses reçues en dehors du champ d'irradiation.

### Etat de la technique

On connaît bien entendu des systèmes dosimétriques conventionnels tels que les chambres à ionisation, détecteurs semi-conducteurs (tels que les diodes), les films, les TLD (dosimètres thermoluminescents) et les EPR (dosimètres à résonance paramagnétique électronique tels que l'ALANINE). Chacun a ses intérêts et ses limitations. Certains nécessitent un câblage permanent, d'autres des procédés complexes et coûteux de lecture ou de préparation. Tout ceci limite fortement leur utilisation en milieu hospitalier et les rend peu adaptés en routine clinique lors des traitements en radiothérapie ou lors des contrôles radiodiagnostiques.

Par le document DE 3 640 756-A, on connaît également un dispositif indicateur de radiations radioactives, en particulier d'un seuil de radiation basé sur le principe d'un condensateur électrique relié à une source de courant continu de bas voltage. Ce dispositif repose sur le principe, déjà connu depuis le début du siècle, d'une conductivité du condensateur sous l'effet de la radioactivité. Il est relié en permanence au dispositif et est prévu pour détecter la radioactivité lorsque celle-ci dépasse un seuil déterminé. Il s'agit essentiellement d'un système d'alarme qui n'est pas destiné à servir de dosimètre, et en particulier de dosimètre "*in vivo*" de grande précision.

### Buts visés par l'invention

L'invention vise donc à fournir un procédé et un dispositif simple quant à la mise en oeuvre et offrant des résultats de haute précision, ceci en évitant les inconvénients des techniques connues. Les principaux avantages sont :
- petite taille des détecteurs ;
- absence de liaison (pas de fils);
- possibilité d'utiliser de nombreux détecteurs simultanément;
- excellente précision de la dose mesurée;
- absence de sensibilité à la température;
- nombre de cycles d'utilisation de chaque capteur très élevé;
- absence de déchets produits par la technique de mesure;
- prix faible de chaque détecteur;
- systèmes de lecture et d'appareillage général peu encombrants;
- mise en oeuvre et calibration aisées;
- manipulation facile pour les mesures individuelles;
- possibilité de calibration individuelle de chaque détecteur pour accroître la précision;
- possibilités d'archivage des valeurs mesurées;
- possibilité d'application directe sur le patient tant en radiothérapie qu'en radiodiagnostic (contrôle *in vivo*) ou en radioprotection.

### Eléments caractéristiques de l'invention

L'invention repose sur l'utilisation de condensateurs électriques fondamentalement classiques qui sont initialement chargés. Une fois irradiés, ils perdent une partie de la charge électrique et en mesurant cette perte de charge ou déficit de charge, il est possible d'évaluer la dose de rayonnements ionisants reçue par le condensateur électrique, le condensateur électrique constituant le capteur ou détecteur dosimétrique des rayonnements ionisants, sans qu'il soit nécessaire de connecter le condensateur pendant l'irradiation à une source quelconque ou à un dispositif de lecture. Le condensateur sert donc à la fois de capteur physique et d'intégrateur. Par sa perte de charge, il intègre la totalité de la dose reçue.

Selon l'invention, on réalise donc des 〈〈 dosimêtres à déficit de charge 〉〉 particulièrement adaptés aux mesures 〈〈 in vivo 〉〉. En effet, par leurs petites dimensions et l'absence totale de connexion, ils conviennent parfaitement à l'utilisation directe sur les patients. Ils sont totalement inoffensifs et perturbent très peu les courbes d'isodose. De plus, cette perturbation peut être évaluée. La technique de mesure de dose absorbée par déficit de charge s'inscrit donc typiquement dans l'assurance de qualité dosimétrique en radiothérapie.

De plus, les condensateurs n'étant reliés à aucun appareil pendant l'irradiation, on peut en utiliser un très grand nombre simultanément pour le suivi de la même irradiation.

De plus, chaque condensateur est réutilisé un très grand nombre de fois; il n'y a donc pas de déchets générés par cette technique.

Le procédé de l'invention consiste donc essentiellement à charger des détecteurs constitués par des condensateurs à une valeur prédéterminée et mesurée à une précision élevée, de préférence supérieure au dix millième (10⁻⁴); à les soumettre aux radiations ionisantes; et enfin à mesurer la charge résiduelle avec la même précision (de préférence 10⁻⁴).

Avantageusement, chaque détecteur, constitué d'un condensateur électrique, peut être étalonné, les courbes d'étalonnage individuelles sont mémorisées dans le lecteur qui en tient compte lors de chaque mesure. Cette courbe de calibration permet de passer d'un déficit de charge à une dose absorbée. Le fait d'avoir une courbe de calibration pour chaque condensateur augmente la précision des mesures en tenant compte de la réponse individuelle de chacun de ceux-ci.

L'appareil de charge et de mesure de haute précision assure également les opérations de calcul (calcul du déficit de charge, traduction en dose en tenant compte des courbes de calibration), de reconnaissance de chaque condensateur et d'archivage (stockage, impression, lien avec base de données, historique complet d'un traitement, etc.).

Plusieurs condensateurs peuvent être utilisés simultanément et être lus individuellement après l'irradiation lorsqu'ils ont été identifiés, en tenant compte de leur courbe d'étalonnage. Ceci peut permettre d'avoir de nombreux points de mesure simultanés et de faire une "cartographie" du champ d'irradiation.

En principe donc, on dispose d'un moyen de gestion complet comprenant l'ensemble des mesures et leurs circonstances (données quant au patient et à son irradiation, type de champ, etc.) et les conditions de fonctionnement de l'équipement (auto-calibration, vérification de l'alimentation, etc.).

Un dispositif mettant en oeuvre ce procédé est constitué avantageusement par un ensemble comportant au moins des moyens adéquats de chargement des condensateurs et un appareillage de lecture affichant et/ou enregistrant individuellement les doses pour chaque utilisation de chaque condensateur. Le module de charge de haute précision peut servir tant à la mesure de charge initiale qu'à la mesure du reliquat de charge. On peut ainsi atteindre une très grande précision (10⁻⁴) sur la mesure de charge. De plus, il est intéressant de trouver les fonctions de calibration des condensateurs individuels, d'auto-étalonnage de l'appareil de mesure, des fonctions de commande et d'affichage des résultats, des fonctions de transfert des informations vers un ordinateur externe ou d'autres périphériques.

Afin de faciliter l'ensemble des opérations, il est recommandable que l'ensemble des fonctions et organes susmentionnés soit logé dans un boîtier unique pourvu de moyens d'insertion des détecteurs pour leurs chargement et lecture. Chaque détecteur est constitué d'un condensateur avec son système de connexion et son moyen d'identification individuel, le tout encapsulé ou inclus dans un petit boîtier.

Le nombre de cycles d'utilisation des condensateurs peut être très élevé (plusieurs centaines). Leur application est bien entendu sans danger pour le patient et le personnel médical. Aucun déchet n'est produit, les détecteurs sont peu encombrants et bon marché et ils peuvent être appliqués facilement sans le recours à aucune liaison électrique ou autre vers des appareils de mesure ou des sources énergétiques. De plus, ils sont très précis, non perturbés par les sollicitations extérieures et, de manière générale, très simples à utiliser.

L'invention concerne donc également l'utilisation des condensateurs selon le principe du déficit de charges après irradiation pour la dosimétrie de rayonnements ionisants sans raccordement permanent à un dispositif de lecture ou à une source énergétique extérieure.

Le principe physique de cette utilisation est celui de l'ionisation dans le diélectrique et la migration des porteurs de charges dans le champ électrique propre au condensateur. La perte de charge résulte des migrations jusqu'aux électrodes ou des recombinaisons électrons-trous au sein même du diélectrique. L'ionisation à laquelle on s'intéresse a lieu dans le plastique constituant le diélectrique. Ce détecteur est donc un détecteur plastique.

En pratique donc, un excellent isolant peut devenir légèrement conducteur ou semi-conducteur lorsqu'il est soumis à une dose de rayonnement ionisant et en conséquence, par la mesure précise de la perte de charge au sein du condensateur, il est possible d'appréhender la dose absorbée. C'est donc par l'estimation de l'ionisation dans la matière plastique que l'on appréhende la dose absorbée dans la matière plastique constituant le diélectrique du condensateur. Le condensateur sert donc par sa structure propre à la fois de capteur (milieu plastique où a lieu l'ionisation) et de système d'intégration de la dose par la perte de charge totale stockée dans le condensateur (déficit de charge résultant des recombinaisons et migrations jusqu'aux électrodes).

En principe, n'importe quel condensateur qui ne subit pas de pertes de charge, ou du moins pas de pertes de charge susceptibles de perturber les mesures en l'absence de rayonnements ionisants, peut convenir.

Un certain nombre de condensateurs du commerce, en particulier ceux dont le diélectrique est constitué principalement de polystyrène (condensateurs de type STYROFLEX - marque déposée) conviennent à cet égard.

Les taux d'isolation de l'ensemble du condensateur et de son conditionnement (encapsulage et connexions) devront donc être particulièrement élevés pour éviter toute perte de charge parasite.

Les débits de doses permettant les meilleures mesures de précision par ce procédé seront de préférence ceux des irradiations rapides du type irradiations thérapeutiques (de l'ordre de 2 Gy par minute), ceci n'excluant pas des utilisations à beaucoup plus bas débit de dose.

Les valeurs capacitives utilisables en général par le procédé sont de quelques nanoFarad (typiquement dans notre exemple de 10 nF), les charges maximales nominales sont de l'ordre de quelques centaines de nanoCoulomb (typiquement 500 nC), les précisions de mesure de charge sont de l'ordre de 10⁻⁴ (typiquement de 50 pC (picoCoulomb)). Ces valeurs sont données à titre d'exemple et ne sont nullement restrictives.

Tout système d'identification individuelle des condensateurs peut être appliqué, par exemple optique (code barre notamment), résistif (code de résistance), électronique (puce) ou autre.

On conçoit aisément que le procédé et la technique décrits combinés à un lecteur à intégration de fonctions connexes, permettent une grande flexibilité opérationnelle en minimisant l'encombrement tant des détecteurs (condensateurs munis de leurs codes de reconnaissance) que de l'équipement de préparation acquisition et stockage des informations. En particulier, la mise en oeuvre lors de l'exposition du détecteur aux radiations ionisantes est simplifiée au maximum, vu l'absence de toute connexion avec l'instrument de préparation et lecture intégré.

L'invention sera décrite plus en détail en référence à un mode d'exécution préféré à l'appui des schémas annexés.

### Brève description des figures

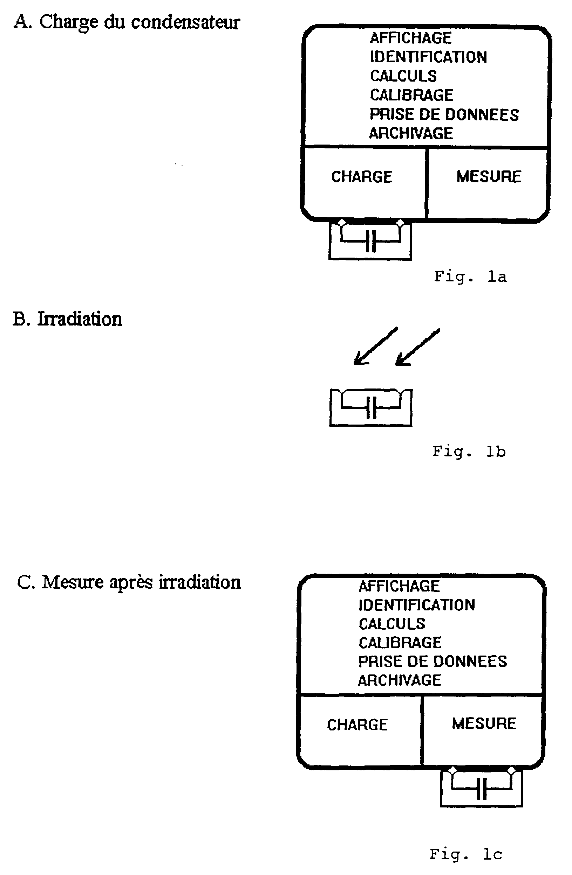

- La figure 1: représente un schéma de principe du procédé de mesure de dose absorbée par déficit de charge et le dispositif intégré de charge et de lecture. On distingue principalement trois étapes : ***a*****.** la charge du condensateur, ***b*****.** l'irradiation par rayonnement ionisant, et ***c*****.** la lecture du résidu de charge après irradiation.

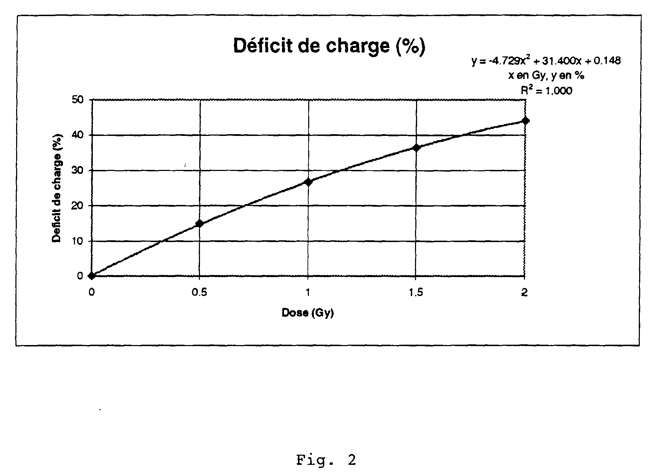

- La figure 2: est la représentation graphique d'une mesure du déficit de charge (% de la charge nominale) en fonction de la dose (Gy) dans le cas d'un condensateur STYROFLEX de 10 nF isolé à 63 V. Il a été chaque fois chargé à 512.3 nC et a reçu successivement des doses de 0, 0.5, 1, 1.5 et 2 Gy dans un faisceau gamma du ⁶⁰Co. On a de plus ajusté avec un excellent accord un polynôme du second degré aux points de mesure. Cette courbe dont l'équation est donnée pourrait aisément servir de courbe de calibration pour ce condensateur dans ces gammes de doses.

## Revendications

1. Procédé de mesure dosimétrique de radiations ionisantes, caractérisé par les étapes consistant à charger des détecteurs, agissant comme capteurs-intégrateurs, constitués par des condensateurs à une valeur prédéterminée dans un chargeur adapté, à les soumettre aux radiations ionisantes et à mesurer, et de préférence à enregistrer, dans un appareil de lecture pour un condensateur identifié, le déficit de charge après irradiation.

2. Procédé selon la revendication 1, caractérisé en ce que chaque détecteur est étalonné, préalablement à son utilisation, les courbes d'étalonnage individuelles sont mémorisées dans le lecteur qui en tient compte lors de chaque mesure en vue d'accroître la précision des mesures de doses absorbées, chaque détecteur étant muni d'un code de reconnaissance individuel.

3. Procédé selon la revendication 1 ou 2, caractérisé en ce que plusieurs condensateurs sont utilisés simultanément et qu'ils sont lus individuellement après l'irradiation lorsqu'ils ont été identifiés, en tenant compte de leur courbe d'étalonnage.

4. Procédé selon l'une quelconque des revendications précédentes, caractérisé en ce que l'appareil de lecture est conçu de manière à mémoriser les doses reçues par chaque détecteur et, éventuellement d'autres données, tels que la date, le nom du patient, la localisation des détecteurs individuels sur le patient et les conditions d'irradiation.

5. Dispositif pour la mise en oeuvre du procédé selon l'une quelconque des revendications 1 à 4, caractérisé en ce qu'il est constitué par un ensemble comportant au moins des moyens adéquats de chargement des détecteurs et un appareillage de lecture affichant et/ou enregistrant individuellement les doses pour chaque utilisation de chaque détecteur.

6. Dispositif selon la revendication 5, caractérisé en ce qu'afin de faciliter l'étalonnage ou calibrage et l'identification des détecteurs et le cas échéant, la mémorisation de données administratives telles que le nom du patient, le repérage des zones d'application etc., l'ensemble pré-mentionné est logé dans un boîtier unique pourvu de moyens d'insertion des détecteurs lors de leur chargement et lors de leur lecture.

7. Dispositif selon la revendication 5 ou 6, caractérisé en ce qu'il comporte des moyens permettant, après chaque lecture combinée avec un affichage et/ou un enregistrement, que le condensateur subisse une annihilation des valeurs de déficit de charge par sa décharge et/ou recharge.

8. Utilisation des condensateurs selon le principe du déficit de charges après irradiation pour la dosimétrie de rayonnements ionisants sans raccordement permanent à un dispositif de lecture ou à une source énergétique extérieure.

9. Utilisation selon la revendication 8, caractérisée en ce qu'on utilise des condensateurs dont le diélectrique est constitué sur base de polystyrène (du type STYROFLEX - marque déposée).

10. Utilisation selon la revendication 8 ou 9 pour les débits de doses des irradiations rapides du type irradiations thérapeutiques.
